# EUROPÄISCHE PATENTSCHRIFT

(11) **EP 3 781 457 B1**
(45) Veröffentlichungstag und Bekanntmachung des Hinweises auf die Patenterteilung: **09.08.2023**
(21) Anmeldenummer: 19721204.6
(22) Anmeldetag: 12.04.2019
(51) Int. Cl.: B62D 15/02, B60W 30/06, G08G 1/16

(54) **VERFAHREN ZUM BETREIBEN EINES PARKASSISTENZSYSTEMS EINES KRAFTFAHRZEUGS UND PARKASSISTENZSYSTEM FÜR EIN KRAFTFAHRZEUG**
METHOD FOR OPERATING A PARKING ASSISTANCE SYSTEM OF A MOTOR VEHICLE AND PARKING ASSISTANCE SYSTEM OF A MOTOR VEHICLE
PROCÉDÉ DE FONCTIONNEMENT D'UN SYSTÈME D'ASSISTANCE AU STATIONNEMENT D'UN VÉHICULE AUTOMOBILE ET SYSTÈME D'ASSISTANCE AU STATIONNEMENT POUR UN VÉHICULE AUTOMOBILE

(30) Priorität: 19.04.2018 DE 102018205968
(43) Veröffentlichungstag der Anmeldung: 24.02.2021
(73) Patentinhaber: VOLKSWAGEN AKTIENGESELLSCHAFT, 38440 Wolfsburg (DE)
(72) Erfinder: ZIEBART, Sascha, 38547 Calberlah (Wettmershagen) (DE); URBAN, Alexander, 38518 Gifhorn (DE); SCHWITTERS, Frank, 38154 Königslutter (DE)
(86) Internationale Anmeldenummer: PCT/EP2019/059379
(87) Internationale Veröffentlichungsnummer: WO 2019/201759

(56) Entgegenhaltungen:
- EP-A2- 2 982 564
- DE-A1-102014 224 075

## Beschreibung

Die Erfindung betrifft ein Verfahren zum Betreiben eines Parkassistenzsystems eines Kraftfahrzeugs sowie ein Parkassistenzsystem für ein Kraftfahrzeug. Des Weiteren betrifft die Erfindung noch ein Kraftfahrzeug mit einem solchen Parkassistenzsystem.

Es sind bereits Parkassistenzsysteme bekannt, welche die Längs- und Querführung eines Kraftfahrzeugs übernehmen können, um das betreffende Kraftfahrzeug automatisch in eine Parklücke hinein zu manövrieren. Derartige Parkassistenzsysteme sind beispielsweise in der DE 10 2010 042 048 A1, der DE 10 2010 062 322 A1 und der DE 10 2010 030 144 A1 gezeigt.

Die DE 10 2016 117 712 A1 zeigt ein Verfahren zum Einparken eine Kraftfahrzeugs. Mittels einer fahrzeugseitigen Sensorik werden Objekte im Fahrzeugumfeld erfasst und basierend darauf wird eine Trajektorie zum Einparken des Kraftfahrzeugs in eine Parklücke ermittelt. Der Einparkvorgang entlang der ermittelten Trajektorie erfolgt zumindest semi-autonom. Falls während des Einparkvorgangs ein bislang noch nicht erfasstes weiteres Objekt erkannt wird, wird überwacht, ob sich die Position des weiteren Objekts verändert. Sobald erkannt wird, dass sich das weitere Objekt außerhalb von einem Erfassungsbereich der Sensorik befindet, wird das Kraftfahrzeug in eine Erkennungsposition bewegt, von der aus die Sensorik das weitere Objekt wieder detektieren kann.

Die EP 2 982 564 A2 zeigt ein Verfahren zum Unterstützen eines Fahrers beim Einparken eines Kraftfahrzeugs auf einer Parkfläche, die mehrere Stellplatzreihen mit jeweils mehreren Stellplätzen für das Kraftfahrzeug umfasst. Das Verfahren umfasst das Abfahren von Fahrtrajektorien entlang der Stellplatzreihen, um währenddessen einen freien Stellplatz zu erkennen und das Kraftfahrzeug auf dem erkannten freien Stellplatz abzustellen.

Solche Parkassistenzsysteme starten jedoch erst dann, wenn eine Parklücke gefunden und vollständig vermessen worden ist. Zum Auffinden und Vermessen geeigneter Parklücken führt ein Fahrer des Kraftfahrzeugs üblicherweise eine Parklückensuchfahrt durch.

Währenddessen erfassen geeignete Sensoren des Kraftfahrzeugs eine Fahrzeugumgebung, wobei basierend darauf dann gegebenenfalls vorhandene Parklücken vermessen werden können.

Es ist die Aufgabe der vorliegenden Erfindung, eine Lösung bereitzustellen, mittels welcher für ein Kraftfahrzeug geeignete Parklücken besonders zuverlässig vermessen und aufgefunden werden können.

Diese Aufgabe wird durch ein Verfahren zum Betreiben eines Parkassistenzsystems eines Kraftfahrzeugs sowie durch ein Parkassistenzsystem für ein Kraftfahrzeug mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Verfahren zum Betreiben eines Parkassistenzsystems eines Kraftfahrzeugs umfasst die folgenden Schritte: Durchführen einer Parklückensuchfahrt mittels des Parkassistenzsystems, indem eine Längsführung und Querführung des Kraftfahrzeugs mittels des Parkassistenzsystems unter Berücksichtigung von zumindest einer Eigenschaft einer Erfassungseinrichtung des Kraftfahrzeugs erfolgt, welche dazu ausgelegt ist, ein Fahrzeugumfeld zu erfassen; Erfassen des Fahrzeugumfelds während der Parklückensuchfahrt mittels der Erfassungseinrichtung; Vermessen von Parklücken mittels des Parkassistenzsystems basierend auf dem erfassten Fahrzeugumfeld; Ermitteln anhand der vermessenen Parklücken, ob eine für das Kraftfahrzeug geeignete Parklücke detektiert worden ist.

Es ist also erfindungsgemäß vorgesehen, dass das Parkassistenzsystem des Kraftfahrzeugs die Längsführung und Querführung des Kraftfahrzeugs übernimmt, während die Parklückensuchfahrt mittels des Kraftfahrzeugs durchgeführt wird. Der Erfindung liegt dabei die Erkenntnis zugrunde, dass bei üblicherweise von Fahrern von Kraftfahrzeugen durchgeführten Parklückensuchfahrten entsprechende Parklücken oftmals nicht unter idealen Bedingungen vermessen werden. Beispielsweise fährt ein Fahrer sehr nahe an den am Fahrbahnrand parkenden Autos vorbei oder in einem sehr großen Abstand. Der Fahrer hat dabei üblicherweise keine Kenntnis darüber, welche Eigenschaften eine Erfassungseinrichtung des Kraftfahrzeugs, welche dazu ausgelegt ist, ein Fahrzeugumfeld zu erfassen, aufweist. Beispielsweise können Radarsensoren, Ultraschallsensoren oder auch Kameras dafür verwendet werden. Da der Fahrer üblicherweise nicht weiß, in welchem Bereich die jeweiligen Sensoren zuverlässige Ergebnisse liefern können, um geeignete Parklücken zu vermessen und zu identifizieren, kann er bei einer manuellen Führung des Kraftfahrzeugs dieses auch nicht so bewegen, dass die betreffenden Sensoren immer zuverlässige Ergebnisse liefern können, anhand derer bestimmt werden kann, ob eine bestimmte Parklücke tatsächlich zum Einparken des betreffenden Kraftfahrzeugs geeignet ist. Wird dann das Kraftfahrzeug beispielsweise autonom eingeparkt, kann dies zu einem schlechten Parkergebnis führen, oder es kann auch vorkommen, dass unerwünschte Korrekturzüge - automatisch oder auch manuell - erfolgen müssen.

Das Messergebnis der Parklückensuche und Parklückenvermessung kann also dadurch beeinträchtigt werden, dass der Fahrer keine Kenntnis über die Eigenschaften der zur Parklückenvermessung verwendeten Sensorik hat und diese nicht bei der Durchführung der Parklückensuchfahrt berücksichtigt.

Bei der erfindungsgemäßen Lösung ist es hingegen vorgesehen, dass das Parkassistenzsystem selbst die Parklückensuchfahrt durchführt, und zwar derart, dass es wenigstens eine Eigenschaft einer Erfassungseinrichtung des Kraftfahrzeugs berücksichtigt, welche dazu ausgelegt ist, ein Fahrzeugumfeld zu erfassen. Das Parkassistenzsystem führt das Kraftfahrzeug also während der automatischen Parklückensuchfahrt so, dass ein bestmögliches Erfassungsergebnis mittels der Erfassungseinrichtung bei der Fahrzeugumfelderfassung, und somit auch der Parklückensuche und Parklückenvermessung, erfolgen kann.

Mittels des erfindungsgemäßen Verfahrens kann somit sichergestellt werden, dass die zur Fahrzeugumfelderfassung ausgebildete Erfassungseinrichtung des Kraftfahrzeugs während der Parklückensuchfahrt potentielle Parklücken besonders zuverlässig erkennen und vermessen kann, sodass auf Basis dieses besonders guten Messergebnisses beziehungsweise Erfassungsergebnisses das Parkassistenzsystem besonders zuverlässig ermitteln kann, ob eine für das Kraftfahrzeug geeignete Parklücke detektiert worden ist. Mit anderen Worten kann also eine optimale Vermessung geeigneter Parklücken mit der vorhandenen Sensorik in Form der Erfassungseinrichtung des Kraftfahrzeugs erfolgen, was schließlich auch das Parkergebnis beim Einparken des Kraftfahrzeugs - sei es automatisch mittels des Parkassistenzsystems oder auch manuell - verbessert. Zudem kann der Fahrer des betreffenden Kraftfahrzeugs während der Parklückensuchfahrt einer Umfeldüberwachung eine besonders hohe Aufmerksamkeit schenken, da er nicht darauf achten muss, dass er die Längsführung und Querführung des Kraftfahrzeugs selbst so steuert, dass die Erfassungseinrichtung für die Parklückensuche gute Messergebnisse liefert. Dadurch können unter anderem auch Parkrempler bei der Parklückensuchfahrt verhindert werden.

Die Erfindung sieht vor, dass die Längsführung und Querführung des Kraftfahrzeugs in Abhängigkeit von einem Erfassungsbereich der Erfassungseinrichtung erfolgt. Dem Parkassistenzsystem werden dafür Daten bereitgestellt, welche den Erfassungsbereich der Erfassungseinrichtung charakterisieren. Werden beispielsweise mehrere an unterschiedlichen Stellen des Kraftfahrzeugs verteilte Sensoren der Erfassungseinrichtung bei der Parklückensuchfahrt dazu verwendet, das Fahrzeugumfeld zu erfassen, so kann das Parkassistenzsystem in Abhängigkeit von den jeweiligen Erfassungsbereichen der Sensoren und somit dem gesamten Erfassungsbereich der Erfassungseinrichtung entscheiden, wie am besten die Längsführung und Querführung des Kraftfahrzeugs bei der Parklückensuchfahrt erfolgen soll, damit potentielle Parklücken besonders gut erkannt und vermessen werden können. So kann beispielsweise die Reichweite von Sensoren an der Seite, an der Front und/oder am Heck des Fahrzeugs berücksichtigt werden. In Kenntnis der Reichweiten kann die Längsführung und Querführung so erfolgen, dass zu erfassende und zu vermessende Parklücken und diese begrenzende Objekte - beispielsweise andere Fahrzeuge oder auch andere Hindernisse - innerhalb der jeweiligen Reichweite der Sensoren liegen.

Eine vorteilhafte Ausführungsform der Erfindung sieht vor, dass die Längsführung und Querführung des Kraftfahrzeugs derart erfolgt, dass ein in Abhängigkeit vom Erfassungsbereich vorgegebener Maximalabstand zu anderen Fahrzeugen und/oder anderen Hindernissen nicht überschritten wird. Je nach vorhandenen Sensoren der Erfassungseinrichtung können diese unterschiedliche Reichweiten aufweisen, innerhalb derer für die Parklückensuche sinnvolle Messergebnisse geliefert werden können. Wird dabei ein bestimmter Maximalabstand zu anderen Fahrzeugen und/oder anderen Hindernissen überschritten, so würden die betreffenden Sensoren keine oder keine brauchbaren Ergebnisse für die Parklückensuche liefern. Daher ist es vorzugsweise vorgesehen, dass in Abhängigkeit vom Erfassungsbereich ein Maximalabstand zu anderen Objekten, wie beispielsweise Fahrzeugen und/oder anderen Hindernissen vorgegeben wird, wobei das Parkassistenzsystem bei der automatischen Längsführung und Querführung des Kraftfahrzeugs sicherstellt, dass dieser vorgegebene Maximalabstand zu anderen Fahrzeugen und/oder anderen Hindernissen bei der Parklückensuchfahrt nicht überschritten wird. Auf diese Weise kann sichergestellt werden, dass die betreffenden Sensoren der Erfassungseinrichtung für die Parklückensuchfahrt gute und sinnvolle Ergebnisse liefern können.

In weiterer vorteilhafter Ausgestaltung der Erfindung ist es vorgesehen, dass die Längsführung und Querführung des Kraftfahrzeugs derart erfolgt, dass ein in Abhängigkeit vom Erfassungsbereich vorgegebener Minimalabstand zu anderen Fahrzeugen und/oder anderen Hindernissen nicht unterschritten wird. Bei gewissen Sensoren kann es vorkommen, dass ab Unterschreitung des vorgegebenen Minimalabstands ebenfalls keine sinnvollen Messergebnisse mehr bei der Parklückensuche zur Verfügung gestellt werden können. Werden beispielsweise Kameras zur Umgebungserfassung verwendet, so kann es sein, dass ab Unterschreitung eines bestimmten Minimalabstands zu anderen Objekten diese Kamera keine hinreichend scharfen Aufnahmen mehr liefert, welche zur Detektion von geeigneten Parklücken und zur Vermessung von Parklücken verwendet werden können. Zudem ist es beispielsweise auch möglich, dass Ultraschallsensoren oder auch Radarsensoren ab Unterschreitung eines bestimmten sensortypischen Minimalabstands ebenfalls keine sinnvollen Messergebnisse mehr liefern, welche eine Parklückenerkennung und/oder Parklückenvermessung ermöglichen. Daher ist es vorzugsweise vorgesehen, den besagten Minimalabstand in Abhängigkeit vom Erfassungsbereich der Erfassungseinrichtung vorzugegeben, wobei die Längsführung und Querführung des Kraftfahrzeugs mittels des Parkassistenzsystems derart erfolgt, dass dieser vorgegebene Minimalabstand zu anderen Objekten, wie zum Beispiel anderen Fahrzeugen und/oder Hindernissen, währen der Parklückensuchfahrt nicht unterschritten wird.

Gemäß einer weiteren vorteilhaften Ausführungsform der Erfindung ist es vorgesehen, dass die Längsführung und Querführung des Kraftfahrzeugs so durchgeführt wird, dass ein möglichst optimales Sichtfeld für die Erfassungseinrichtung zur Erfassung der zu vermessenden Parklücken vorliegt. Dafür können beispielsweise Informationen beziehungsweise Daten bereitgestellt werden, an welchen Positionen des Kraftfahrzeugs welche Arten von Sensoren verbaut sind, die zur Erfassung des Fahrzeugumfelds verwendet werden. Werden beispielsweise im unteren Bereich von Außenspiegeln verbaute Kameras zur Umfelderfassung bei der Parklückensuchfahrt verwendet, so können Informationen beziehungsweise Daten bereitgestellt werden, die charakterisieren, aus welcher Perspektive diese Kameras überhaupt die Fahrzeugumgebung erfassen können. In Abhängigkeit davon kann beispielsweise die Längsführung und Querführung des Kraftfahrzeugs so durchgeführt werden, dass ein möglichst optimales Sichtfeld für die betreffenden Kameras sichergestellt werden kann. Bei anderen Sensoren, wie beispielsweise Radarsensoren oder Ultraschallsensoren, können zum Beispiel Daten beziehungsweise Informationen bereitgestellt werden, welche die Positionierung der betreffenden Sensoren und eine Abstrahlcharakteristik von Ultraschallsignalen beziehungsweise Radarsignalen kennzeichnen. In Kenntnis dieser Informationen kann die Längsführung und Querführung des Kraftfahrzeugs auch so durchgeführt werden, dass ein möglichst optimales Sichtfeld, in Form eines Erfassungsfelds, während der Parklückensuchfahrt im Hinblick auf zu erfassende Objekte sichergestellt werden kann.

Eine weitere vorteilhafte Ausführungsform der Erfindung sieht vor, dass anhand der erfassten Fahrzeugumgebung andere Fahrzeuge und/oder Hindernisse erkannt werden, wobei die Längsführung und Querführung derart erfolgt, dass den erkannten anderen Fahrzeugen und/oder Hindernissen ausgewichen wird. Mit anderen Worten ist es also vorzugsweise vorgesehen, dass das Parkassistenzsystem nicht nur die Eigenschaften der Erfassungseinrichtung des Kraftfahrzeugs bei der Parklückensuchfahrt berücksichtigt. Zusätzlich ist es auch vorzugsweise vorgesehen, dass im Zuge der Erfassung des Fahrzeugumfelds Hindernisse, wie andere Fahrzeuge oder auch fest stehende Hindernisse, erfasst und derart berücksichtigt werden, dass das Parkassistenzsystem durch entsprechende Ansteuerung des Kraftfahrzeugs diesen Hindernissen ausweicht. So kann es beispielsweise vorkommen, dass während der Parklückensuchfahrt ein gerade noch geparktes anderes Fahrzeug aus seiner Parklücke ausparkt. In dem Fall kann die Erfassungseinrichtung des Kraftfahrzeugs die Positionsveränderung des ausparkenden anderen Fahrzeugs erfassen und diesbezügliche Daten dem Parkassistenzsystem bereitstellen. Dieses steuert dann das Kraftfahrzeug während der Parklückensuchfahrt so an, dass dieses beispielsweise stehenbleibt, bis das andere Fahrzeug die Parklücke verlassen hat, oder beispielsweise auch ein Fahrmanöver zum Ausweichen einleitet. Während der Parklückensuchfahrt kann also zuverlässig verhindert werden, dass das Kraftfahrzeug mit anderen Objekten, wie beispielsweise anderen Fahrzeugen oder anderen Hindernissen kollidiert.

Gemäß einer weiteren vorteilhaften Ausführungsform der Erfindung ist es vorgesehen, dass die Erfassung der Fahrzeugumgebung mittels wenigstens einer Kamera, eines Ultraschallsensors und/oder Radarsensors der Erfassungseinrichtung erfolgt. Auf diese Weise kann die Fahrzeugumgebung besonders zuverlässig erfasst werden, um die Fahrzeugumgebung charakterisierende Daten zur Parklückensuche bereitzustellen.

In weiterer vorteilhafter Ausgestaltung der Erfindung ist es vorgesehen, dass das Parkassistenzsystem die Parklückensuchfahrt nur unter der Bedingung durchführt, dass eine Person steuernd auf das Kraftfahrzeug einwirken kann. Beispielsweise kann dafür überwacht werden, ob ein Fahrer des Kraftfahrzeugs seine Hände am Lenkrad hat, um gegebenenfalls selbst steuernd eingreifen zu können. Andere Mechanismen sind auch möglich, um zu überprüfen, ob ein Fahrer des Kraftfahrzeugs gerade steuernd auf das Kraftfahrzeug einwirken kann. Auch ist es denkbar, dass sich ein Benutzer des Kraftfahrzeugs außerhalb des Kraftfahrzeugs befindet, wobei jedoch beispielsweise überwacht wird, ob dieser eine Smartphone-App in vorgegebener Weise bedient, um zu signalisieren, dass er jederzeit steuernd auf das Kraftfahrzeug einwirken kann, beispielsweise um dieses im einfachsten Fall durch eine entsprechende Betätigung innerhalb der App zu stoppen. Das Parkassistenzsystem führt die Parklückensuchfahrt also nur unter der Bedingung durch, dass ein Mensch als Reservesystem beziehungsweise Rückfallebene einspringen kann. Insbesondere bei einer Parklückensuchfahrt auf öffentlichen Straßen ist dies besonders sinnvoll, da dadurch das Risiko erheblich minimiert werden kann, das bei einem Fehler durch das Parkassistenzsystem Kollisionen vorkommen.

Gemäß einer weiteren vorteilhaften Ausführungsform der Erfindung ist es vorgesehen, dass falls eine für das Kraftfahrzeug geeignete Parklücke detektiert worden ist, das Parkassistenzsystem das Kraftfahrzeug nur unter der Bedingung in diese Parklücke hineinfährt, dass eine Person steuernd auf das Kraftfahrzeug einwirken kann. Auch hier kann beispielsweise überprüft werden, ob ein Fahrer eingriffsbereit auf dem Fahrersitz sitzt, beispielsweise indem überwacht wird, ob er seine Hände am Lenkrad hat. Die oben stehend beschriebene Vorgehensweise hinsichtlich einer Smartphone-App kann in dem Fall beispielsweise auch angewendet werden. Das Parkassistenzsystem parkt das Kraftfahrzeug also nur dann selbstständig in eine als geeignet befundene Parklücke ein, wenn ein Mensch als Reservesystem beziehungsweise Rückfallebene zur Verfügung steht, um gegebenenfalls steuernd auf das Kraftfahrzeug einwirken zu können. Dadurch kann die Sicherheit beim automatischen Einparken gesteigert werden.

Eine weitere vorteilhafte Ausführungsform der Erfindung sieht vor, dass das Parkassistenzsystem die Parklückensuchfahrt nur dann vollautonom durchführt, ohne dass eine Person steuernd auf das Kraftfahrzeug einwirken können muss, wenn sich das Kraftfahrzeug in einem vorgegebenen Bereich, insbesondere auf einem Parkplatz oder in einem Parkhaus, befindet. Mit anderen Worten ist es also in einem definierten Bereich, zum Beispiel auf einem Parkplatz eines Kaufhauses oder dergleichen, möglich, dass das Parkassistenzsystem durch einfaches Abfahren von einer Reihe von geparkten Fahrzeugen eigenständig eine Parklücke sucht, ohne dass ein Mensch als Reservesystem beziehungsweise Rückfallebene vorhanden sein muss. So wäre es beispielsweise möglich, dass ein Fahrer das Kraftfahrzeug verlässt und das Parkassistenzsystem die Parklückensuchfahrt vollautonom durchführt, ohne dass der Fahrer eingriffsbereit im Fahrzeug sitzen muss. Außerhalb von Straßen, vorzugsweise im Bereich von abgeschlossenen Parkhäusern oder Parkplätzen, kann das Parkassistenzsystem die Parklückensuchfahrt also vollautonom durchführen, was besonders bequem für einen Fahrer des Kraftfahrzeugs ist, da er die Parklückensuchfahrt selbst nicht überwachen muss.

Insbesondere ist es vorteilhaft, wenn eine für das Kraftfahrzeug geeignete Parklücke im vorgegebenen Bereich, beispielsweise auf einem Parkplatz oder in einem Parkhaus, detektiert worden ist, das Parkassistenzsystem das Kraftfahrzeug vollautonom in diese Parklücke hineinfährt, ohne dass eine Person steuernd auf das Kraftfahrzeug einwirken können muss. Wurde also im Zuge der vollautonomen Parklückensuchfahrt eine geeignete Parklücke erkannt, kann das Parkassistenzsystem das Kraftfahrzeug dann auch vollautonom in die Parklücke hinein manövrieren, ohne dass beispielsweise ein Fahrer im Fahrzeug oder auch außerhalb des Fahrzeugs zugegen sein muss. So kann das Parkassistenzsystem beispielsweise auch besonders enge Parklücken als geeignet auswählen, da ein Fahrer nicht mehr aus seinem Fahrzeug aussteigen können muss. Denn dieser kann spätestens vor dem vollautomatischen Einparkvorgang das Kraftfahrzeug verlassen. So können vorhandene Parkflächen besonders effektiv ausgenutzt werden, da das betreffende Kraftfahrzeug auch in sehr enge Parklücken eingeparkt werden kann, da danach keine Türen mehr geöffnet werden müssen.

Das erfindungsgemäße Parkassistenzsystem für ein Kraftfahrzeug ist dazu eingerichtet, eine Parklückensuchfahrt durchführen, indem es eine Längsführung und Querführung des Kraftfahrzeugs unter Berücksichtigung von zumindest einer Eigenschaft einer Erfassungseinrichtung des Kraftfahrzeugs steuert, welche dazu ausgelegt ist, ein Fahrzeugumfeld zu erfassen. Des Weiteren ist das Parkassistenzsystem dazu eingerichtet, Parklücken basierend auf einem mittels der Erfassungseinrichtung erfassten Fahrzeugumfeld zu vermessen und anhand der vermessenen Parklücken zu ermitteln, ob eine für das Kraftfahrzeug geeignete Parklücke detektiert worden ist. Das Parkassistenzsystem ist dazu eingerichtet, die Längsführung und Querführung des Kraftfahrzeugs in Abhängigkeit von einem Erfassungsbereich der Erfassungseinrichtung durchzuführen. Vorteilhafte Ausgestaltungen des erfindungsgemäßen Verfahrens sind als vorteilhafte Ausgestaltungen des erfindungsgemäßen Parkassistenzsystems anzusehen, wobei das Parkassistenzsystem insbesondere Mittel zur Durchführung der Verfahrensschritte aufweist.

Das erfindungsgemäße Kraftfahrzeug umfasst das erfindungsgemäße Parkassistenzsystem oder eine vorteilhafte Ausführungsform des erfindungsgemäße Parkassistenzsystems, sowie eine Erfassungseinrichtung, welche dazu ausgelegt ist, ein Fahrzeugumfeld zu erfassen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftfahrzeugs mit einer Erfassungseinrichtung zum Erfassen eines Fahrzeugumfelds und einem Parkassistenzsystem, welches zur automatischen Durchführung einer Parklückensuchfahrt ausgebildet ist; und in
- Fig. 2: eine schematische Darstellung des Kraftfahrzeugs, während dieses eine Parklückensuchfahrt durchführt und währenddessen entlang einer Reihe von geparkten Kraftfahrzeugen entlangfährt.

In den Figuren sind gleiche oder funktionsgleiche Elemente mit den gleichen Bezugszeichen versehen worden.

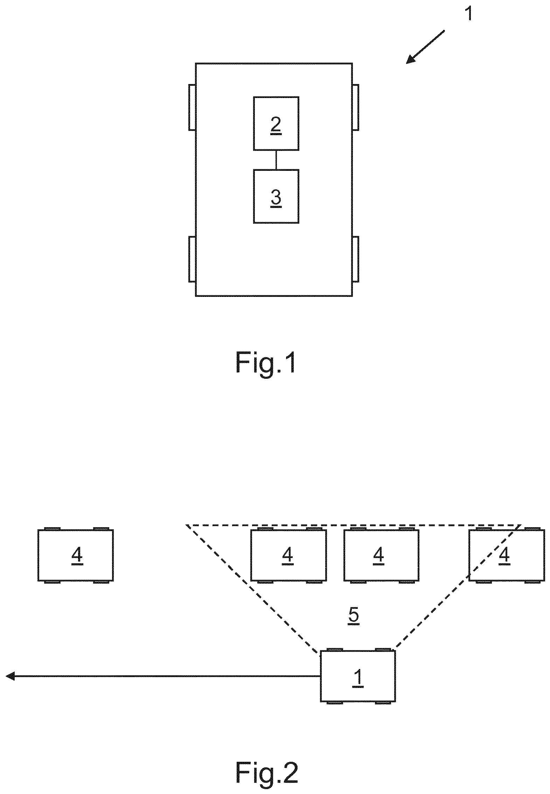

Ein Kraftfahrzeug 1 mit einem Parkassistenzsystem 2 und einer Erfassungseinrichtung 3 zur Umfelderfassung ist in einer schematischen Darstellung in Fig. 1 gezeigt. Das Parkassistenzsystem 2 ist dazu ausgelegt, für einen automatische Parklückensuchfahrt eine Längsführung und Querführung des Kraftfahrzeugs zu übernehmen. Die Erfassungseinrichtung 3 kann eine Reihe von hier nicht näher dargestellten Sensoren aufweisen, mittels welchen die Fahrzeugumgebung erfasst werden kann. Die Sensoren können an verschiedensten Stellen des Kraftfahrzeugs 1 angebracht sein. So kann das Kraftfahrzeug 1 beispielsweise mehrere Kameras, Ultraschallsensoren oder Radarsensoren aufweisen, mittels welchen die Fahrzeugumgebung erfasst werden kann.

In Fig. 2 ist das Kraftfahrzeug 1 in einer weiteren schematischen Darstellung gezeigt, während das Parkassistenzsystem 2 zum Durchführen einer Parklückensuchfahrt die Längsführung und Querführung des Kraftfahrzeugs 1 übernimmt. In der vorliegend schematische gezeigten Situation sind eine Reihe von weiteren Kraftfahrzeugen 4 in Längsrichtung hintereinander geparkt. Beispielsweise kann das Kraftfahrzeug 1 gerade eine Parklückensuchfahrt entlang einer Straße vornehmen, wobei die weiteren Kraftfahrzeuge 4 am Straßenrand geparkt sind.

Das Parkassistenzsystem 2 des Kraftfahrzeugs 1 führt die Parklückensuchfahrt durch, indem es die Längsführung und Querführung des Kraftfahrzeugs 1 unter Berücksichtigung von zumindest einer Eigenschaft der Erfassungseinrichtung 3 des Kraftfahrzeugs 1 vornimmt. Beispielsweise kann das Kraftfahrzeug 1 an seiner Längsseite unterschiedliche Sensoren aufweisen, beispielsweise Ultraschallsensoren oder auch eine oder mehrere Kameras, wobei beispielsweise eine der Kameras an einem unteren Bereich eines Außenspiegels angeordnet sein kann. Dem Parkassistenzsystem 2 werden Informationen beziehungsweise Daten darüber bereitgestellt, was für einen Erfassungsbereich die jeweiligen Sensoren der Erfassungseinrichtung 3 aufweisen, welche zur Umfelderfassung genutzt werden. So erfolgt die Längsführung und Querführung des Kraftfahrzeugs 1 während der automatischen Parklückensuchfahrt in Abhängigkeit von einem Erfassungsbereich der Erfassungseinrichtung 3. Dabei erfolgt die Längsführung und Querführung des Kraftfahrzeugs 1 beispielsweise derart, dass ein in Abhängigkeit vom Erfassungsbereich 5 der Erfassungseinrichtung 3 vorgegebener Maximalabstand zu den anderen Kraftfahrzeugen 4 und/oder anderen hier nicht dargestellten Hindernissen nicht überschritten wird. Dadurch kann sichergestellt werden, dass die betreffenden Sensoren der Erfassungseinrichtung 3 das Fahrzeugumfeld seitlich vom Kraftfahrzeug 1 in hinreichend guter Qualität erfassen können, sodass basierend darauf verschiedene Lücken und Parklücken mittels des Parkassistenzsystems 2 vermessen werden können. Auch ist es möglich, dass die Längsführung und Querführung des Kraftfahrzeugs 1 derart erfolgt, dass ein in Abhängigkeit vom Erfassungsbereich 5 vorgegebener Minimalabstand zu den Kraftfahrzeugen 4 und/oder anderen Hindernissen nicht unterschritten wird. So kann es sein, das gewissen Sensoren beziehungsweise Kameras der Erfassungseinrichtung 3 ab Unterschreitung eines bestimmten Minimalabstands zu anderen Objekten keine sinnvollen oder brauchbaren Messergebnisse mehr liefern, welche eine Vermessung und Erkennung geeigneter Parklücken ermöglichen würden. Dadurch, dass dieser vorgegebene minimale Abstand zu den anderen Kraftfahrzeugen 4 oder auch anderen Hindernissen beim Führen des Kraftfahrzeugs 1 nicht unterschritten wird, kann sichergestellt werden, dass die betreffenden Sensoren beziehungsweise Kameras der Erfassungseinrichtung 3 für die Parklückensuche sinnvolle und brauchbare Ergebnisse liefern. Zudem kann der Minimalabstand aus Sicherheitsgründen auch beispielsweise so festgelegt werden, dass noch ein sinnvoller Mindestabstand zu den Kraftfahrzeugen 4 oder auch anderen Hindernissen eingehalten wird. So kann das Parkassistenzsystem 2 das Kraftfahrzeug 1 beispielsweise so steuern, dass selbst wenn Fahrzeugtüren der Kraftfahrzeuge 4 plötzlich geöffnet werden, noch ein genügend großer seitlicher Abstand vorhanden ist, dass diese Türen nicht in das Kraftfahrzeug 1 geschlagen werden.

Zudem ist es auch möglich, dass die Längsführung und Querführung des Kraftfahrzeugs 1 mittels des Parkassistenzsystems 2 derart erfolgt, dass ein möglichst optimales Sichtfeld für die Erfassungseinrichtung 3 zur Erfassung der zu vermessenden Parklücken vorliegt. Dafür können beispielsweise Informationen oder Daten bereitgestellt werden, an welchen Positionen betreffende Sensoren beziehungsweise Kameras der Erfassungseinrichtung 3 angeordnet sind und aus welcher Perspektive diese die Fahrzeugumgebung überhaupt erfassen können. Unter Berücksichtigung dieser Daten beziehungsweise Informationen kann das Parkassistenzsystem 3 steuernd auf die Längsführung und Querführung der Kraftfahrzeugs 1 einwirken, sodass möglichst optimale Messergebnisse hinsichtlich der erfassten Fahrzeugumgebung vorliegen, die es ermöglichen, potentielle Parklücken zu vermessen und basierend darauf zu entscheiden, ob eine für das Kraftfahrzeug 1 geeignete Parklücke detektiert worden ist.

Es kann vorgesehen sein, dass das Parkassistenzsystem 2 die Parklückensuchfahrt nur unter der Bedingung durchführt, dass eine Person steuernd auf das Kraftfahrzeug 1 einwirken kann. Beispielsweise wird überwacht, ob ein Fahrer im Kraftfahrzeug 1 sitzt und beispielsweise seine Hände am Lenkrad hat. Sind diese Bedingungen erfüllt, so führt das Parkassistenzsystem die automatische Längssteuerung und Quersteuerung des Kraftfahrzeugs 1 im Zuge der automatischen Parklückensuchfahrt durch. Sobald ermittelt wird, dass die betreffende Person, also der Fahrer, nicht mehr steuernd auf das Kraftfahrzeug 1 einwirken kann, kann es vorgesehen sein, dass die automatische Parklückensuchfahrt gestoppt wird. In dem Fall kann es vorgesehen sein, dass eine akustische und/oder optische Meldung im Fahrzeuginnenraum ausgegeben wird, welche den Fahrer dazu auffordert, seine Bereitschaft wieder herzustellen, steuernd auf das Kraftfahrzeug 1 einzuwirken. Sobald dies wieder der Fall sein sollte, kann es vorgesehen sein, dass die automatische Parklückensuchfahrt wieder fortgeführt wird.

Wurde eine passende Parklücke für das Kraftfahrzeug 1 detektiert, kann das Parkassistenzsystem 2 das Kraftfahrzeug 1 beispielsweise wiederum nur unter der Bedingung in diese Parklücke hineinfahren, dass der Fahrer steuernd auf das Kraftfahrzeug 1 einwirken kann. Dadurch kann sichergestellt werden, dass auch beim Einparkvorgang bei Bedarf der Fahrer als Rückfallebene steuernd auf das Kraftfahrzeug 1 einwirken kann. Insbesondere auf öffentlichen Straßen ist es sinnvoll, wenn das Parkassistenzsystem 2 die Parklückensuchfahrt und/oder das automatische Einparken nur unter der Bedingung durchführt, dass eine Person auch steuernd auf das Kraftfahrzeug 1 einwirken kann.

Befindet sich das Kraftfahrzeug 1 hingegen beispielsweise in einem Parkhaus oder auf einer abgeschlossenen Parkfläche eines Supermarktes oder dergleichen, kann es vorgesehen sein, dass das Parkassistenzsystem 2 die Parklückensuchfahrt und auch den Einparkvorgang vollautonom durchführt, ohne dass eine Person, insbesondere der Fahrer, steuernd auf das Kraftfahrzeug 1 einwirken können muss. In dem Fall kann ein Fahrer des Kraftfahrzeugs 1 beispielsweise zuerst aus seinem Kraftfahrzeug aussteigen, wonach das Parkassistenzsystem 2 vollautonom die Parklückensuchfahrt durchführt und falls eine passende Parklücke gefunden wird, das Kraftfahrzeugs 1 auch vollautonom einparkt.

Es ist insbesondere auch vorgesehen, dass das Parkassistenzsystem 2 während der Parklückensuchfahrt anhand der permanent erfassten Fahrzeugumgebung die Längsführung und Querführung des Kraftfahrzeugs 1 so steuert, dass die anderen Kraftfahrzeuge 4 oder auch andere hier nicht dargestellte Hindernisse erkannt werden und diesen bei Bedarf ausgewichen wird oder das Kraftfahrzeug 1 gestoppt wird. Beispielsweise könnte es sein, dass während der Parklückensuchfahrt eines der Kraftfahrzeuge 4 gerade einen Ausparkvorgang beginnt. Die Erfassungseinrichtung 3 des Kraftfahrzeugs 1 kann anhand der permanenten Erfassung der Fahrzeugumgebung erkennen, dass eines der Kraftfahrzeuge 4 gerade ein Ausparkmanöver beginnt. In dem Fall kann das Parkassistenzsystem 2 das Kraftfahrzeug 1 beispielsweise so steuern, dass es ein Ausweichmanöver vornimmt, sodass es zu keiner Kollision mit dem betreffenden anderen Kraftfahrzeug 4 kommt. Alternativ ist es beispielsweise auch möglich, dass das Parkassistenzsystem die Bremse des Kraftfahrzeugs 1 betätigt und dieses so lange anhält, bis das andere Kraftfahrzeug 4, welches gerade seine Parklücke verlässt, den Ausparkvorgang beendet hat und weggefahren ist. Letzteres kann besonders sinnvoll sein, da hier die Möglichkeit besteht, dass die durch den Ausparkvorgang des anderen Kraftfahrzeugs 4 frei gewordene Parklücke gegebenenfalls auch eine potentielle Parklücke für das Kraftfahrzeug 1 darstellt.

Das erläuterte Verfahren und Parkassistenzsystem 2 trägt dazu bei, dass im Zuge einer Parklückensuchfahrt verschiedenste Eigenschaften der Erfassungseinrichtung 3 und betreffender Sensoren berücksichtigt werden können. Dadurch ist es möglich, besonders gute Ergebnisse beziehungsweise Sensor- und/oder Kameraergebnisse zu liefern, welche sich zum Auffinden und Vermessen von geeigneten Parklücken verwenden lassen. Ein Fahrer des Kraftfahrzeugs 1 muss sich während der Parklückensuchfahrt keine Gedanken darüber machen, wie er das Kraftfahrzeug 1 bewegen muss, sodass die betreffenden Sensoren beziehungsweise Kameras der Erfassungseinrichtung 3 auch solche Messergebnisse liefern können, welche eine hinreichende Qualität aufweisen, um basierend darauf Parklücken zu vermessen und zu entscheiden, ob die vermessenen Parklücken für das Kraftfahrzeug 1 geeignet sind. Ferner kann der Fahrer der Umfeldüberwachung während der automatischen Parklückensuchfahrt eine erhöhte Aufmerksamkeit schenken, da er nicht damit beschäftigt ist, nach Parklücken Ausschau zu halten und das Kraftfahrzeug 1 so zu steuern, dass die Erfassungseinrichtung 3 auch zur Vermessung und Identifikation geeigneter Parklücken ausreichende Daten liefern kann. Dadurch, dass das Parkassistenzsystem 2 das Kraftfahrzeug 1 auch so steuern kann, dass Kollisionen mit anderen Objekten vermieden werden, können beispielsweise Parkrempler oder dergleichen bei der Parklückensuchfahrt verhindert werden. Insgesamt liefert die beschriebene Vorgehensweise und das Parkassistenzsystem 2 ein besonders gutes Parkergebnis, da auf besonders zuverlässige Weise potentielle Parklücken vermessen und geeignete Parklücken für das Kraftfahrzeug 1 identifiziert werden können.

### Bezugszeichenliste

- 1: Kraftfahrzeug
- 2: Parkassistenzsystem
- 3: Erfassungseinrichtung
- 4: weitere Kraftfahrzeuge
- 5: Erfassungsbereich der Erfassungseinrichtung

## Patentansprüche

1. Verfahren zum Betreiben eines Parkassistenzsystems (2) eines Kraftfahrzeugs (1), umfassend die Schritte:
- Durchführen einer Parklückensuchfahrt mittels des Parkassistenzsystems (2), indem eine Längsführung und Querführung des Kraftfahrzeugs (1) mittels des Parkassistenzsystems (2) unter Berücksichtigung von zumindest einer Eigenschaft einer Erfassungseinrichtung (3) des Kraftfahrzeugs (1) erfolgt, welche dazu ausgelegt ist, ein Fahrzeugumfeld zu erfassen;
- Erfassen des Fahrzeugumfelds während der Parklückensuchfahrt mittels der Erfassungseinrichtung (3);
- Vermessen von Parklücken mittels des Parkassistenzsystems (2) basierend auf dem erfassten Fahrzeugumfeld;
- Ermitteln anhand der vermessenen Parklücken, ob eine für das Kraftfahrzeug (1) geeignete Parklücke detektiert worden ist;
**dadurch gekennzeichnet, dass**
die Längsführung und Querführung des Kraftfahrzeugs (1) in Abhängigkeit von einem Erfassungsbereich (5) der Erfassungseinrichtung (3) erfolgt.

2. Verfahren nach Anspruch 1,
**dadurch gekennzeichnet, dass**
die Längsführung und Querführung des Kraftfahrzeugs (1) derart erfolgt, dass ein in Abhängigkeit vom Erfassungsbereich (5) vorgegebener Maximalabstand zu anderen Fahrzeugen und/oder anderen Hindernissen nicht überschritten wird.

3. Verfahren nach Anspruch 1 oder 2,
**dadurch gekennzeichnet, dass**
die Längsführung und Querführung des Kraftfahrzeugs (1) derart erfolgt, dass ein in Abhängigkeit vom Erfassungsbereich (5) vorgegebener Minimalabstand zu anderen Fahrzeugen (4) und/oder anderen Hindernissen nicht unterschritten wird.

4. Verfahren nach einem der vorhergehenden Ansprüche,
**dadurch gekennzeichnet, dass**
die Längsführung und Querführung des Kraftfahrzeugs (1) so durchgeführt wird, dass ein möglichst optimales Sichtfeld für die Erfassungseinrichtung (3) zur Erfassung der zu vermessenden Parklücken vorliegt.

5. Verfahren nach einem der vorhergehenden Ansprüche,
**dadurch gekennzeichnet, dass**
anhand der erfassten Fahrzeugumgebung andere Fahrzeuge (4) und/oder Hindernisse erkannt werden, wobei die Längsführung und Querführung derart erfolgt, dass den erkannten anderen Fahrzeugen (4) und/oder Hindernissen ausgewichen wird.

6. Verfahren nach einem der vorhergehenden Ansprüche,
**dadurch gekennzeichnet, dass**
die Erfassung der Fahrzeugumgebung mittels wenigstens einer Kamera, eines Ultraschallsensors und/oder Radarsensors der Erfassungseinrichtung (3) erfolgt.

7. Verfahren nach einem der vorhergehenden Ansprüche,
**dadurch gekennzeichnet, dass**
das Parkassistenzsystem (2) die Parklückensuchfahrt nur unter der Bedingung durchführt, dass eine Person steuernd auf das Kraftfahrzeug (1) einwirken kann.

8. Verfahren nach einem der vorhergehenden Ansprüche,
**dadurch gekennzeichnet, dass**
falls eine für das Kraftfahrzeug (1) geeignete Parklücke detektiert worden ist, das Parkassistenzsystem (2) das Kraftfahrzeug (1) nur unter der Bedingung in diese Parklücke hineinfährt, dass eine Person steuernd auf das Kraftfahrzeug (1) einwirken kann.

9. Verfahren nach einem der vorhergehenden Ansprüche,
**dadurch gekennzeichnet, dass**
das Parkassistenzsystem (2) die Parklückensuchfahrt nur dann vollautonom durchführt, ohne dass eine Person steuernd auf das Kraftfahrzeug (1) einwirken können muss, wenn sich das Kraftfahrzeug (1) in einem vorgegebenen Bereich, insbesondere auf einem Parkplatz oder in einem Parkhaus, befindet.

10. Verfahren nach Anspruch 9,
**dadurch gekennzeichnet, dass**
falls eine für das Kraftfahrzeug (1) geeignete Parklücke im vorgegebenen Bereich detektiert worden ist, das Parkassistenzsystem (2) das Kraftfahrzeug (1) vollautonom in diese Parklücke hineinfährt.

11. Parkassistenzsystem (2) für ein Kraftfahrzeug (1), welches dazu eingerichtet ist,
- eine Parklückensuchfahrt durchführen, indem es eine Längsführung und Querführung des Kraftfahrzeugs (1) unter Berücksichtigung von zumindest einer Eigenschaft einer Erfassungseinrichtung (3) des Kraftfahrzeugs (1) steuert, welche dazu ausgelegt ist, ein Fahrzeugumfeld zu erfassen;
- Parklücken basierend auf einem mittels der Erfassungseinrichtung (3) erfassten Fahrzeugumfeld zu vermessen und anhand der vermessenen Parklücken zu ermitteln, ob eine für das Kraftfahrzeug (1) geeignete Parklücke detektiert worden ist;
**dadurch gekennzeichnet, dass** das Parkassistenzsystem (2) dazu eingerichtet ist, die Längsführung und Querführung des Kraftfahrzeugs (1) in Abhängigkeit von einem Erfassungsbereich (5) der Erfassungseinrichtung (3) durchzuführen.

12. Kraftfahrzeug (1) mit einem Parkassistenzsystem (2) nach Anspruch 11 und einer Erfassungseinrichtung (3), welche dazu ausgelegt ist, ein Fahrzeugumfeld zu erfassen.

## Claims

1. Method for operating a parking assistance system (2) of a motor vehicle (1), comprising the steps of:
- making a parking space search journey by means of the parking assistance system (2) by performing longitudinal guidance and lateral guidance of the motor vehicle (1) by means of the parking assistance system (2) while taking account of at least one property of a capture device (3) of the motor vehicle (1), which is designed to capture a vehicle environment;
- capturing the vehicle environment during the parking space search journey by means of the capture device (3);
- surveying parking spaces by means of the parking assistance system (2) on the basis of the captured vehicle environment;
- taking the surveyed parking spaces as a basis for ascertaining whether a parking space suitable for the motor vehicle (1) has been detected;
**characterized in that**
the longitudinal guidance and lateral guidance of the motor vehicle (1) are performed on the basis of a capture region (5) of the capture device (3).

2. Method according to Claim 1,
**characterized in that**
the longitudinal guidance and lateral guidance of the motor vehicle (1) are performed in such a way that a maximum distance from other vehicles and/or other obstacles, which is predefined on the basis of the capture region (5), is not exceeded.

3. Method according to Claim 1 or 2,
**characterized in that**
the longitudinal guidance and lateral guidance of the motor vehicle (1) are performed in such a way that a minimum distance from other vehicles (4) and/or other obstacles, which is predefined on the basis of the capture region (5), is not encroached on.

4. Method according to one of the preceding claims,
**characterized in that**
the longitudinal guidance and lateral guidance of the motor vehicle (1) are carried out in such a way that there is as optimum as possible a field of view for the capture device (3) to capture the parking spaces to be surveyed.

5. Method according to one of the preceding claims,
**characterized in that**
the captured vehicle surroundings are taken as a basis for identifying other vehicles (4) and/or obstacles, the longitudinal guidance and lateral guidance being performed in such a way that the identified other vehicles (4) and/or obstacles are avoided.

6. Method according to one of the preceding claims,
**characterized in that**
the vehicle surroundings are captured by means of at least one camera, an ultrasonic sensor and/or radar sensor of the capture device (3).

7. Method according to one of the preceding claims,
**characterized in that** the parking assistance system (2) makes the parking space search journey only on condition that a person can take steering action on the motor vehicle (1).

8. Method according to one of the preceding claims,
**characterized in that**
if a parking space suitable for the motor vehicle (1) has been detected, the parking assistance system (2) drives the motor vehicle (1) into this parking space only on condition that a person can take steering action on the motor vehicle (1).

9. Method according to one of the preceding claims, **characterized in that** the parking assistance system (2) makes the parking space search journey fully autonomously, without a person needing to be able to take steering action on the motor vehicle (1), only if the motor vehicle (1) is situated in a predefined region, in particular in a car park or in a multistorey car park.

10. Method according to Claim 9,
**characterized in that**
if a parking space suitable for the motor vehicle (1) has been detected in the predefined region, the parking assistance system (2) drives the motor vehicle (1) into this parking space fully autonomously.

11. Parking assistance system (2) for a motor vehicle (1), configured
- to make a parking space search journey by controlling longitudinal guidance and lateral guidance of the motor vehicle (1) while taking account of at least one property of a capture device (3) of the motor vehicle (1), which is designed to capture a vehicle environment;
- to survey parking spaces on the basis of a vehicle environment captured by means of the capture device (3) and to take the surveyed parking spaces as a basis for ascertaining whether a parking space suitable for the motor vehicle (1) has been detected;
**characterized in that** the parking assistance system (2) is configured to carry out the longitudinal guidance and lateral guidance of the motor vehicle (1) on the basis of a capture region (5) of the capture device (3) .

12. Motor vehicle (1) having a parking assistance system (2) according to Claim 11 and a capture device (3) that is designed to capture a vehicle environment.

## Revendications

1. Procédé de fonctionnement d'un système d'assistance au stationnement (2) d'un véhicule automobile (1), comprenant les étapes suivantes :
- exécution d'un parcours de recherche de place de stationnement au moyen du système d'assistance au stationnement (2), en effectuant un guidage longitudinal et un guidage transversal du véhicule automobile (1) au moyen du système d'assistance au stationnement (2) en tenant compte d'au moins une propriété d'un dispositif de détection (3) du véhicule automobile (1), qui est conçu pour détecter un environnement du véhicule ;
- détection de l'environnement du véhicule pendant le parcours de recherche de place de stationnement au moyen du dispositif de détection (3) ;
- mesure des places de stationnement au moyen du système d'assistance au stationnement (2) sur la base de l'environnement du véhicule détecté ;
- détermination, en utilisant les places de stationnement mesurées, du point de savoir si une place de stationnement appropriée pour le véhicule automobile (1) a été détectée ;
**caractérisé en ce que**
le guidage longitudinal et le guidage transversal du véhicule automobile (1) s'effectuent en fonction d'une zone de détection (5) du dispositif de détection (3).

2. Procédé selon la revendication 1,
**caractérisé en ce que**
le guidage longitudinal et le guidage transversal du véhicule automobile (1) s'effectuent de telle sorte qu'une distance maximale par rapport à d'autres véhicules et/ou à d'autres obstacles, prédéfinie en fonction de la zone de détection (5), ne soit pas dépassée.

3. Procédé selon la revendication 1 ou 2,
**caractérisé en ce que**
le guidage longitudinal et le guidage transversal du véhicule automobile (1) s'effectue de telle sorte qu'une distance minimale par rapport à d'autres véhicules (4) et/ou à d'autres obstacles, prédéfinie en fonction de la zone de détection (5), ne soit pas dépassée vers le bas.

4. Procédé selon l'une des revendications précédentes,
**caractérisé en ce que**
le guidage longitudinal et le guidage transversal du véhicule automobile (1) sont effectués de telle sorte qu'il existe un champ de vision aussi optimal que possible pour que le dispositif de détection (3) détecte les places de stationnement à mesurer.

5. Procédé selon l'une des revendications précédentes,
**caractérisé en ce que**
sur la base de l'environnement du véhicule détecté, d'autres véhicules (4) et/ou des obstacles sont détectés, le guidage longitudinal et le guidage transversal étant effectués de manière à éviter les autres véhicules (4) et/ou les obstacles détectés.

6. Procédé selon l'une des revendications précédentes,
**caractérisé en ce que**
la détection de l'environnement du véhicule s'effectue au moyen d'au moins une caméra, d'un capteur à ultrasons et/ou d'un capteur radar du dispositif de détection (3).

7. Procédé selon l'une des revendications précédentes,
**caractérisé en ce que**
le système d'assistance au stationnement (2) n'effectue la recherche de place de stationnement qu'à la condition qu'une personne puisse agir sur le véhicule automobile (1) en le commandant.

8. Procédé selon l'une des revendications précédentes,
**caractérisé en ce que**
si une place de stationnement adaptée pour le véhicule automobile (1) a été détectée, le système d'assistance au stationnement (2) ne fait entrer le véhicule automobile (1) dans cette place de stationnement qu'à la condition qu'une personne puisse agir sur le véhicule automobile (1) en le commandant.

9. Procédé selon l'une des revendications précédentes,
**caractérisé en ce que**
le système d'assistance au stationnement (2) n'effectue le parcours de recherche de place de stationnement de manière entièrement autonome, sans qu'une personne doive pouvoir agir sur le véhicule automobile (1) en le commandant, que si le véhicule automobile (1) se trouve dans une zone prédéfinie, en particulier dans un emplacement de parking ou dans un parking couvert.

10. Procédé selon la revendication 9,
**caractérisé en ce que**
si une place de stationnement appropriée pour le véhicule automobile (1) a été détectée dans la zone prédéfinie, le système d'assistance au stationnement (2) fait entrer le véhicule automobile (1) dans cette place de stationnement de manière entièrement autonome.

11. Système d'assistance au stationnement (2) pour un véhicule automobile (1), qui est conçu de manière à,
- effectuer une recherche de place de stationnement en commandant un guidage longitudinal et un guidage transversal du véhicule automobile (1) en tenant compte d'au moins une propriété d'un dispositif de détection (3) du véhicule automobile (1), qui est conçu pour détecter un environnement du véhicule ;
- mesurer des places de stationnement sur la base d'un environnement de véhicule détecté au moyen du dispositif de détection (3) et déterminer, en utilisant les places de stationnement mesurées, si une place de stationnement appropriée pour le véhicule automobile (1) a été détectée ;
**caractérisé en ce que** le système d'assistance au stationnement (2) est conçu pour effectuer le guidage longitudinal et le guidage transversal du véhicule automobile (1) en fonction d'une zone de détection (5) du dispositif de détection (3).

12. Véhicule automobile (1) avec un système d'assistance au stationnement (2) selon la revendication 11 et un dispositif de détection (3) qui est conçu pour détecter un environnement du véhicule.
